# EUROPÄISCHE PATENTSCHRIFT

(11) **EP 3 737 533 B1**
(45) Veröffentlichungstag und Bekanntmachung des Hinweises auf die Patenterteilung: **15.06.2022**
(21) Anmeldenummer: 19701429.3
(22) Anmeldetag: 03.01.2019
(51) Int. Cl.: B25B 23/14, B25B 23/142, B23P 19/06

(54) **AUSLÖSEMECHANISMUS FÜR EIN DREHMOMENTWERKZEUG**
RELEASE MECHANISM FOR A TORQUE TOOL
MÉCANISME DE DÉCLENCHEMENT POUR UN OUTIL DE COUPLE

(30) Priorität: 12.01.2018 DE 102018100665
(43) Veröffentlichungstag der Anmeldung: 18.11.2020
(73) Patentinhaber: STAHLWILLE Eduard Wille GmbH & Co. KG, 42349 Wuppertal (DE)
(72) Erfinder: JENKINS, Brad, Monrovia, CA, 91016 (US)
(74) Vertreter: Willems, Volker
(86) Internationale Anmeldenummer: PCT/DE2019/100000
(87) Internationale Veröffentlichungsnummer: WO 2019/137577

(56) Entgegenhaltungen:
- DE-A1- 10 051 011
- DE-A1- 19 912 837
- DE-A1-102006 013 147
- DE-A1-102007 059 965
- FR-A1- 3 010 341
- US-A- 6 119 562
- US-A1- 2007 261 868
- US-A1- 2015 328 756

## Beschreibung

### Technisches Gebiet

Die Erfindung betrifft einen Auslösemechanismus für ein elektronisch auslösendes Drehmomentwerkzeug zum Anziehen einer Schraube oder dgl., welches bei einem Solldrehmoment auslöst, enthaltend
a) einen Antriebskörper und einen Grundkörper, welche zum Übertragen eines Drehmoments um eine gemeinsame Achse rotieren,
b) einen Verriegelungsmechanismus, welcher den Antriebskörper und den Grundkörper zur Übertragung eines Drehmoments miteinander koppelt,
c) Erfassungs- und Auswertemittel zum Erfassen und Auswerten des übertragenen Drehmoments,
d) einen Signalgeber, welcher den Verriegelungsmechanismus zum Entkoppeln des Antriebskörpers von dem Grundkörper bei Erreichen eines Solldrehmoments betätigt,
e) der Verriegelungsmechanismus eine federbelastete Hebelanordnung aufweist, wobei die Hebelanordnung den Antriebskörper mit dem Grundkörper zur Übertragung eines Drehmoments koppelt und beim Auslösen den Grundkörper zum Freilauf entriegelt.

### Beschreibung

Die Verschraubung ist die am häufigsten genutzte Verbindung im Maschinenbau. Solche Verbindungselemente können nur durch die Verwendung geeigneter Montagewerkzeuge wirksam werden. Zu den hierfür geeigneten Montagewerkzeugen zählen Drehmomentwerkzeuge wie der Drehmomentschraubendreher.

Drehmomentwerkzeuge werden benötigt, um an einem Werkstück ein bestimmtes Drehmoment auszuüben. Als Drehmomentwerkzeuge sind beispielsweise Drehmomentschlüssel oder Drehmomentschraubendreher bekannt. Es gibt mechanische und elektronische Drehmomentwerkzeuge. Insbesondere gibt es anzeigende und auslösende Drehmomentwerkzeuge. Anzeigende Drehmomentwerkzeuge zeigen immer das jeweils aktuell anliegende Drehmoment an. Bei auslösenden Drehmomentwerkzeugen wird ein Solldrehmoment eingestellt. Sobald dieses Drehmoment beim Anziehen einer Verschraubung erreicht wird, signalisiert das Drehmomentwerkzeug das Erreichen des Solldrehmoments einem Nutzer. Dies kann beispielsweise durch ein hörbares Klicken oder fühlbares Knacken signalisiert werden. Der Auslösemechanismus kann dazu ganz unterschiedlich ausgebildet sein. So kann beispielsweise auch bei Erreichen des Solldrehmoments verhindert werden, dass ein größeres als das eingestellte Solldrehmoment auf ein Werkstück übertragen wird.

Das bei der Verwendung handgeführter Werkzeuge zu übertragende Drehmoment ist hierbei sowohl von der physischen Konstitution des Benutzers als auch von dessen subjektivem Kraftempfinden abhängig. Drehmomentwerkzeuge werden eingesetzt, um eine Schraube mit einer hohen Vorspannkraft zu belasten, die im elastischen Bereich der Schraube liegt, oder auch, um die Schraube mit nur geringen Vorspannkräften zu belasten. Der Einsatz von neuen Konstruktionswerkstoffen wie z. B. Magnesium, Aluminium oder Kunststoff, vor allem für den Leichtbau in der Automobil- oder Flugzeugindustrie, lässt sowohl den Bedarf als auch die Anforderungen an die Drehmomentwerkzeuge ansteigen. Durch diese neuen Werkstoffe steigt nämlich die Zahl der empfindlichen Schraubverbindungen. Die geringere Zugfestigkeit dieser Leichtbau-Werkstoffe im Vergleich zu Stahlwerkstoffen würde bei einer Überbeanspruchung der Schraubverbindung zu Beschädigungen des Gewindes führen, die diese teuren Bauteile unbrauchbar machen würden.

Bekannte signalisierende Drehmomentwerkzeuge haben insbesondere den Nachteil, dass sie nur das Solldrehmoment anzeigen. Eine Unterbrechung der Übertragung des Drehmoments auf ein Werkstück findet nicht statt. Solche unterbrechende Drehmomentwerkzeuge sind in der Regel aufwendig in der Herstellung, kompliziert im Aufbau und damit auch sehr kostenintensiv.

### Stand der Technik

Aus der DE 20 2007 015 971 U1 ist ein multifunktionales pneumatisches Werkzeug bekannt. Das multifunktionelle pneumatische Werkzeug umfasst einen Basiskörper, an dem ein Bedienungshebel, ein Einlassanschluss und ein Zylinder angeordnet sind. Im Inneren des Zylinders ist ein Rotor mit Schaufeln angeordnet. Der Zylinder ist durch einen Einlassschalter mit dem Einlassanschluss verbunden. Der Einlassschalter ist durch den Bedienungshebel steuerbar. Eine Drehwelle des Rotors ist dabei durch den Zylinder geführt. Das Werkzeug umfasst zusätzlich mindestens zwei Werkzeugköpfe mit unterschiedlichen Funktionen. Ein Verbindungselement ist am hinteren Ende jedes Werkzeugkopfes angeordnet und eine Verbindungseinrichtung am vorderen Ende des Basiskörpers. Das Verbindungselement eines beliebigen von den Werkzeugköpfen mit der Verbindungseinrichtung ist am vorderen Ende des Basiskörpers lösbar verbunden. Das hintere Ende des Verbindungselementes ist mit dem vorderen Ende des Rotors lösbar verbunden. Die lösbare Verbindung des an dem hinteren Ende des Werkzeugkopfes angeordneten Verbindungselementes mit dem vorderen Ende des Rotors gewährleistet, dass ein Drehmoment bei der Drehung der Schaufel zu den einzelnen Werkzeugköpfen übertragen wird.

In der DE 20 2006 008 056 U1 wird eine Kraftübertragungseinrichtung zur Übertragung eines Drehmoments, das kleiner als ein einstellbarer Wert ist, beschrieben. Die dort beschriebene Kraftübertragungseinrichtung wird dabei als Steckschlüssel eingesetzt.

Die TW M2789822 offenbart eine Kraftübertragungseinrichtung mit einstellbarem Drehmoment. Die Kraftübertragungseinrichtung umfasst ein Antriebsmittel, eine Hülse oder Muffe, ein Keilelement und eine Feder. Das Antriebsmittel ist mit der Hülse so verbunden, dass sie in Bezug aufeinander bewegt und gedreht werden können. Durch Einstellen der relativen axialen Position zwischen dem Antriebsmittel und der Hülse wird die in die Feder eingebrachte Kraft eingestellt und so das maximale Drehmoment, das zwischen dem Keilelement und der Hülse übertragen werden kann.

In der DE 20 2011 050 280 U1 wird ein einstellbarer Drehmomentschlüssel mit einem Werkzeugantriebsteil beschrieben. Das Drehmomentwerkzeug weist dort einen rohrförmigen Werkzeugschaft auf, welcher sich in seine Längsrichtung erstreckt. An dessen einem ersten Endabschnitt ist ein Handgriff angeordnet, welcher um die Längsachse herum drehbar an dem Werkzeugschaft gelagert ist. Der Handgriff ist mit einer Spanneinheit im Inneren des Handgriffs und/oder Werkzeugschafts direkt oder indirekt gekoppelt. Durch die Drehung des Handgriffs wird eine Spiralfeder gespannt oder entlastet, über welche das jeweils aufzubringende Anzugsmoment voreingestellt wird. Der Handgriff weist ferner einen Klapphebel auf, welcher in seiner Ruheposition an dem Handgriff anliegt. In einem Übergangsbereich zwischen dem Werkzeugschaft und dem Handgriff ist eine Skala angeordnet, welche numerische Angaben über das jeweils aktuell eingestellte Anzugsmoment aufweisen kann. Der Übergangsbereich Ist gegenüber dem Werkzeugschaft verjüngt, wobei er in seinem Querschnitt reduziert ist. Ein dem ersten Endabschnitt gegenüberliegender zweiter Endabschnitt des Werkzeugschaftes dient der Kopplung mit einem Werkzeugantriebsteil, welcher der Aufnahme von Werkzeugen dient, in der Regel Aufsteckwerkzeuge. Hierfür ist der ansonsten Im Querschnitt kreisförmige Werkzeugschaft an seinem zweiten Endabschnitt geplättet, so dass sich endseitig eine rechteckförmige Öffnung ausbildet.

Aus der deutschen Offenlegungsschrift DE 100 51 011 A1 ist ein auslösender Drehmomentschlüssel bekannt, der das Drehmoment elektronisch erfasst. Mit einem Dehnmessstreifen wird das mechanische Drehmoment in ein elektronisches Signal umgewandelt. Das so erfasste Drehmoment wird mit einem Sollwert verglichen. Erreicht das gemessene Drehmoment den eingestellten oder vorgegebenen Drehmomentsollwert, wird durch die elektronische Auswertung der Drehmomentschlüssel mechanisch zumindest kurzzeitig freigegeben. Die Freigabe erfolgt hier beispielsweise durch Entkopplung von Schlüsselgriff und Schlüsselkopf.

Die DE 20 2014 00 0041 U1 betrifft ein auslösendes Drehmomentwerkzeug, welches ein schaftartiges Gehäuse mit einem Griffbereich und einem Kopfbereich enthält. Eine Übertragungsanordnung ist in dem Gehäuse zur Übertragung des Drehmoments vorgesehen. Das Drehmomentwerkzeug weist ferner eine Stellvorrichtung mit einem Stellknopf zum Einstellen eines gewünschten Drehmoments auf, bei dem das erreichte Drehmoment signalisiert wird. Eine Anzeige zeigt einen Drehmomentwert an, bei dem das Drehmomentwerkzeug auslösen soll. Ferner enthält das Drehmomentwerkzeug einen Auslösemechanismus, mit dem das Drehmomentwerkzeug beim eingestellten Drehmoment auslöst.

Aus der DE 10 2006 013 147 A1 ist ein Drehmomentwerkzeug zum Messen und/oder zum auslösenden Anziehen eines Drehmoments an einem Werkstück bekannt. Das Drehmomentwerkzeug enthält ein Gehäuse mit einem Griff und einen Stab zum Übertragen des Drehmoments. Ein Messelement dient zur elektronischen Erfassung des Drehmoments, welches von einer Mess- und Steuerelektronik verarbeitet wird. Ein durch die elektronische Mess- und Steuerelektronik gesteuerter Auslöseschalter löst bei einem Sollwert das Drehmomentwerkzeug aus. Der dort beschriebene Drehmomentschlüssel weist einen Untersetzungsmechanismus auf, welcher wenigstens ein von dem Auslöseschalter betätigtes Stellglied aufweist. Dabei ist der Untersetzungsmechanismus zwischen dem Stab zur Übertragung des Drehmoments und dem elektronisch gesteuerten Auslöseschalter zur Auslösung des Drehmomentwerkzeugs angeordnet. In diesem Dokument wird beschrieben, dass der Untersetzungsmechanismus einen Schalthebel mit einer Schaltkante enthält, der durch den elektronisch gesteuerten Auslöseschalter angesteuert wird.

Aus der FR 3 010 341 A1 ist ein Mechanismus zum Verriegeln bzw. zum Entriegeln einer Rolle in einem Auslöse- bzw. Einrastsystem bei einem Aktuator eines Drehmomentschlüssels bekannt. Dabei wird eine einen Kopf blockierende Rolle durch einen Schieber blockiert. Der Schieber wird wiederum durch drei Kugeln blockiert. die jeweils in drei Gehäusen untergebracht sind.

Die US 6 119 562 A, die die Merkmale des Oberbegriffs des Anspruch, 1 oftenbart beschreibt einen elektromechanisch auslösenden Drehmomentschlüssel, der eine elektronische Steuerung und Messwertgeber oder zum Messen und Auslösen einer Freigabe des Schlüssels mit physikalischen, akustischen und visuellen Signalen aufweist. Bei der Bedienung stellt der Anwender am Tastenfeld der elektronischen Steuerung den gewünschten Drehmoment-Auslösepunkt ein und setzt dann den Schraubenschlüssel mit der aus dem Gehäuse schwenkbar herausragenden Ratsche an einem Werkstück an. Der Benutzer zieht das Werkstück fest, in der Regel ein Befestigungselement mit Gewinde, und die an der Ratsche oder angebrachten Kraftsensoren erzeugen ein analoges Signal an das Steuergerät. Wenn der Auslösepunkt erreicht ist, sendet die Steuerung ein Signal an einen Magneten oder einen linearen Aktuator, der eine lineare mechanische Bewegung erzeugt, wodurch die Sperrklinke mit mechanischem Vorteil und die Auslösemittel die Sperrklinke auslösen, was zu einer kurzzeitigen Verringerung der Kraft führt, die der Bediener spürt, und zu einem hörbaren Klickgeräusch, wenn die Sperrklinke auf das Gehäuse trifft.

### Offenbarung der Erfindung

Aufgabe der Erfindung ist es daher, Nachteile des Standes der Technik zu vermeiden und einen Auslösemechanismus für einen elektronisches und auslösendes Drehmomentwerkzeug zu schaffen, welches einfach aufgebaut und kostengünstig in der Herstellung ist. Dabei soll die Wirkung besonders auch bei motorisch angetriebenen Drehmomentwerkzeugen eine hohe Wirksamkeit beim Auslösen erreichen. Erfindungsgemäß wird die Aufgabe dadurch gelöst, dass bei einem Auslösemechanismus für ein elektronisches auslösendes Drehmomentwerkzeug zum Anziehen einer Schraube oder dgl. mit einem Solldrehmoment der eingangs genannten Art
f) die Hebelanordnung des Verriegelungsmechanismus auf ein Verriegelungselement wirkt, welches zum Verriegeln in eine Ausnehmung des Antriebskörpers greift und zum Entriegeln aus der Ausnehmung mittels der Hebelanordnung entfernt wird.

Die Erfindung beruht auf dem Prinzip, dass der Antrieb, sei er maschinell oder manuell, bei Erreichen eines Solldrehmoments keinen Einfluss mehr auf die Verschraubung hat. Der Antrieb zur Übertragung eines Drehmoments wird dazu entkoppelt, indem der Grundkörper, welches das Drehmoment, beispielsweise mit einem Adapter, auf ein Werkstück überträgt, von dem Antrieb entkoppelt wird. Der Grundkörper ist dazu drehbar gegenüber dem Antrieb gelagert und kann daher im entriegelten Zustand frei laufen. Erst durch die Verriegelung wird der Grundkörper mit dem Antrieb gekoppelt, so dass über den Antrieb und den Grundkörper ein Drehmoment bis zum Solldrehmoment übertragen werden kann. Das Verriegeln bzw. Entriegeln des Verriegelungsmechanismus lässt sich mit einer Hebelanordnung besonders einfach realisieren. Denn hierbei können Kräfte bei Betätigung des Auslösemechanismus einfach umgelenkt werden. Auch lassen sich Kräfte, die bei der Betätigung des Verriegelungsmechanismus eingesetzt werden, ggf. teilen bzw. vervielfältigen, je nach Verwendung der Hebel. Das zu erreichende Solldrehmoment lässt sich dabei mit geeigneten Mitteln voreinstellen.

Als vorteilhafte Ausgestaltung des erfindungsgemäßen Auslösemechanismus hat sich erwiesen, wenn ein elektrisch betriebener Aktuator vorgesehen ist, welcher den Verriegelungsmechanismus bei Erreichen des Solldrehmoments entriegelt. Ein solcher elektrisch betriebener Aktuator ist beisplelsweise ein elektrisch gesteuerter Hubmagnet. Hubmagneten sind bekannte und einfach herzustellende Bauteile. Der Verriegelungsmechanismus lässt sich außerdem auf diese Weise mit einem Hubmagneten einfach elektronisch ansteuern und bedienen. Ein geeignetes elektrisches Signal ist hierfür ausreichend, um den Hubmagneten zu aktivieren.

Erfindungsgemäß wirkt die Hebelanordnung des Verriegelungsmechanismus auf ein Verriegelungselement, welches zum Verriegeln in eine Ausnehmung des Antriebskörper greift und zum Entriegeln aus der Ausnehmung mittels der Hebelanordnung entfernt wird. Das Verriegelungselement koppelt den Grundkörper mit dem Antriebskörper. Sobald die Hebelanordnung auf ein solches Verriegelungselement wirken kann, können Kräfte praktisch an Jede Stelle in dem Drehmomentwerkzeug über die Hebelanordnung zum Verriegelungselement übertragen werden. Dadurch lässt sich eine zuverlässige und sichere Verriegelung erreichen. Das Verriegelungselement kann bei Bedarf auch besonders gehärtet sein und kann theoretisch jede beliebige Form, wie beispielsweise eine Kugel, annehmen. Die Form der Aufnahme bzw. der Ausnehmung sollte in dem Fall sich dem Verriegelungselement zweckmäßig anpassen.

Eine zweckmäßige und vorteilhafte Ausbildung des erfindungsgemäßen Auslösemechanismus ergibt sich ferner dadurch, dass die Hebelanordnung als federbelastete Kniehebelanordnung vorgesehen ist. Mit der Kniehebelanordnung lässt sich die Hebelanordnung besonders gut für den Auslösemechanismus realisieren. Die Kräfte, die zum Auslösen bei der Entriegelung benötigt werden, sind mit dem Kniehebel einfach zu übertragen.

In einer bevorzugten und vorteilhaften Variante des erfindungsgemäßen Auslösemechanismus ist das Verriegelungselement in einem Umlenkrohr in dem Grundkörper vorgesehen. Bei dieser Variante können die Verriegelungselemente optimal durch den Grundkörper zur Arretierung bzw. Verriegelung bewegt werden. Als vorteilhaft hat es sich zudem erwiesen, wenn dann das Verriegelungselement in einem um 90° gekrümmten Umlenkrohr in dem Grundkörper vorgesehen ist, welches von einer axialen Richtung in eine radiale Richtung übergeht.

In einer weiteren vorteilhaften Ausgestaltung des erfindungsgemäßen Auslösemechanismus ist in dem Grundkörper ein axialer Kanal vorgesehen, in welchem ein federbelastetes und bewegliches Stößel angeordnet ist, welches auf eine Hebelanordnung zur Verriegelung wirkt und beim Auslösen zum Entriegeln in dem Kanal zur Erzeugung eines Ausweichraums für ein Verriegelungselement mithilfe des elektrisch betriebenen Aktuators, beispielsweise des Hubmagneten, bewegt wird.

Eine weitere vorteilhafte Ausbildung des erfindungsgemäßen Auslösemechanismus ergibt sich dadurch, dass ein federbelasteter Kolben in einem Kanal des Grundkörpers vorgesehen ist, an dem die Hebelanordnung mit einem Gelenk zum Verriegeln oder zum Entriegeln des Verriegelungsmechanismus vorgesehen ist.

Eine weitere bevorzugte und zweckmäßige Ausgestaltung des erfindungsgemäßen Auslösemechanismus besteht darin, dass der Grundkörper eine axiale Welle umfasst, auf der ein federbelasteter Ringkörper vorgesehen ist, wobei die Hebelanordnung zur Betätigung des Verriegelungselements an dem Ringkörper angeordnet ist.

Weitere Ausgestaltungen und Vorteile ergeben sich aus dem Gegenstand der Unteransprüche sowie den Zeichnungen mit den dazugehörigen Beschreibungen. Ausführungsbeispiele sind nachstehend unter Bezugnahme auf die beigefügten Zeichnungen näher erläutert. Die Erfindung soll nicht alleine auf diese aufgeführten Ausführungsbeispiele beschränkt werden. Sie dienen lediglich zur näheren Erläuterung der Erfindung.

**Kurze Beschreibung der Zeichnung**
- Fig. 1: zeigt in einer schematischen Prinzipskizze im axialen Längsschnitt einen erfindungsgemäßen Auslösemechanismus für ein Drehmomentwerkzeug im verriegelten Zustand.
- Fig. 2: zeigt in einem schematischen Querschnitt einen erfindungsgemäßen Auslösemechanismus für ein Drehmomentwerkzeug im verriegelten Zustand gemäß Fig. 1.
- Fig. 3: zeigt in einer schematischen Prinzipskizze im axialen Längsschnitt einen erfindungsgemäßen Auslösemechanismus für ein Drehmomentwerkzeug im entriegelten Zustand gemäß Fig. 1 und .2.
- Fig.4: zeigt in einem schematischen Querschnitt einen erfindungsgemäßen Auslösemechanismus für ein Drehmomentwerkzeug im entriegelten Zustand gemäß Fig. 3.
- Fig. 5: zeigt in einem weiteren Ausführungsbeispiel im axialen Längsschnitt einen erfindungsgemäßen Auslösemechanismus für ein Drehmomentwerkzeug im verriegelten Zustand.
- Fig. 6: zeigt in einem schematischen Querschnitt einen erfindungsgemäßen Auslösemechanismus für ein Drehmomentwerkzeug im verriegelten Zustand gemäß Fig. 5.
- Fig. 7: zeigt in einem dritten Ausführungsbeispiel im axialen Längsschnitt einen erfindungsgemäßen Auslösemechanismus für ein Drehmomentwerkzeug im verriegelten Zustand.
- Fig. 8: zeigt in einem schematischen Querschnitt einen erfindungsgemäßen Auslösemechanismus für ein Drehmomentwerkzeug im verriegelten Zustand gemäß Fig. 7.
- Fig. 9: zeigt in einem vierten Ausführungsbeispiel im axialen Längsschnitt einen erfindungsgemäßen Auslösemechanismus für ein Drehmomentwerkzeug im verriegelten Zustand.
- Fig. 10: zeigt im axialen Längsschnitt den erfindungsgemäßen Auslösemechanismus gemäß Fig. 9 für ein Drehmomentwerkzeug im entriegelten Zustand.
- Fig. 11: zeigt in einem fünften Ausführungsbeispiel im axialen Längsschnitt einen erfindungsgemäßen Auslösemechanismus für ein Drehmomentwerkzeug Im verriegelten Zustand.
- Fig. 12: zeigt im axialen Längsschnitt den erfindungsgemäßen Auslösemechanismus gemäß Fig. 11 für ein Drehmomentwerkzeug im entriegelten Zustand.

### Bevorzugtes Ausführungsbeispiel

In Fig. 1 wird mit 10 ein erfindungsgemäßer Auslösemechanismus für ein Drehmomentwerkzeug 12 zum Anziehen einer Schraube oder dgl. mit einem Solldrehmoment bezeichnet Das Drehmomentwerkzeug 12 ist in Fig. 1 in einem Ausschnitt als axialer Längsschnitt dargestellt. Das Drehmomentwerkzeug 12 umfasst einen zylinderförmigen Grundkörper 14 mit einem gehäuseartigen Antriebskörper 16. In einem Bereich 18 des Antriebskörpers 16 ist ein Antriebsschaft 20 fixiert. Der Antriebsschaft 20 ist fest mit dem Antriebskörper verbunden. Der Antriebsschaft 20 kann beispielsweise als Torsionsstab ausgebildet sein, an welchem ein Dehnungsmessstreifen zur Erfassung eines zu übertragenden Drehmoments vorgesehen ist.

In einem Hohlraum 22 des Antriebskörpers 16 ist ein Hubmagnet 24 als elektrisch betriebener Aktuator vorgesehen. Der Hubmagnet 24 verfügt über einen Bolzen 26. Der Bolzen 26 wirkt bei Betätigung des Hubmagneten 24 auf eine Hebelanordnung 28 eines Verriegelungsmechanismus 30, welcher zwischen dem Grundkörper 14 und dem Antriebskörper 16 vorgesehen ist. Der Verriegelungsmechanismus 30 und der Hubmagnet 24 sind Bestandteile des Auslösemechanismus 10.

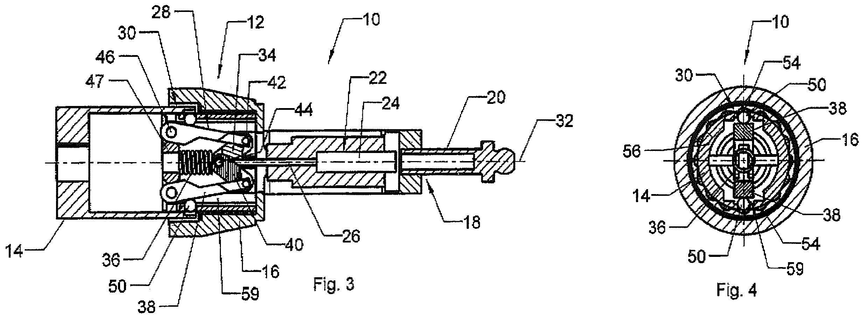

Der Grundkörper 14 ist mit dem Antriebskörper 16 in diesem Ausführungsbeispiel zusammengesteckt. Der Grundkörper 14 ist dabei drehbar in dem Antriebskörper 16 gelagert, sodass in einem entriegelten Zustand, wie es in den Figuren 3 und 4 dargestellt ist, der Grundkörper 14 um eine gemeinsame Rotationsachse 32 frei laufen kann. Im verriegelten Zustand, wie es in den Figuren 1 und 2 dargestellt ist, sind der Antriebskörper 16 und der Grundkörper 14 miteinander gekoppelt. Der Antriebskörper 16 treibt dann den Grundkörper 14 zur Übertragung eines Drehmoments auf ein Werkstück an.

Die Hebelanordnung 28 besteht aus einer Kniehebelanordnung 34, welche mit einer Spiralfeder 36 vorgespannt ist. Die Kniehebelanordnung 34 besteht in vorliegendem Ausführungsbeispiel aus zwei axial angeordneten Hebeln 38, welche über zwei radial angeordnete Hebel 40 gelenkig über Gelenkverbindungen 42, 44 miteinander verbunden sind. Die Hebelanordnung 28 selbst ist über Gelenke 46 gelenkig mit dem Grundkörper 14 über eine Gelenkplattform 47 verbunden. Die Gelenkplattform 47 ist in vorliegendem Ausführungsbeispiel als eine Art Steg ausgebildet, welcher fest an dem Grundkörper 14 vorgesehen ist.

Der Bolzen 26 des Hubmagneten 24 wirkt bei dessen Betätigung dabei auf die zentrale Gelenkverbindung 44, welches die radialen Hebel 40 miteinander verbindet. Jeweils an Außenseiten 48 der axialen Hebel 38 befinden sich Verriegelungselemente 50, welche als Kugeln 52 ausgebildet sind. Die Verriegelungselemente 50 greifen in Arretierausnehmungen 54 des Antriebskörpers 16. Die Arretierausnehmungen 54 befinden sich in der Innenfläche 56 des Antriebskörpers 16.

Die Spiralfeder 36 wirkt auf der gegenüberliegenden Seite 58 zum Bolzen 26 auf das zentrale Gelenk 44 und spannt damit die Hebelanordnung 28 vor. Die Verriegelungselemente 50 werden durch die Federkraft der Spiralfeder 36 von den axialen Hebeln 38 in die Arretierausnehmungen 54 gedrückt. Der Verriegelungsmechanismus 30 des Auslösemechanismus 10 verhindert nun, dass der Grundkörper 14 gegenüber dem Antriebskörper 16 um die gemeinsame Rotationsachse 32 frei laufen kann. In diesem verriegelten Zustand kann ein Drehmoment von dem Antriebskörper 16 über den Grundkörper 14 auf ein Werkstück übertragen werden.

In Fig. 2 wird ein Querschnitt des erfindungsgemäßen Auslösemechanismus 10 für ein Drehmomentwerkzeug 12 im verriegelten Zustand gemäß der Fig. 1 dargestellt. Soweit diese Fig. 2 der Fig. 1 entspricht, werden auch die gleichen Bezugszeichen verwendet. In dieser Darstellung wird deutlich, wie der Grundkörper 14 im Bereich des Verriegelungsmechanismus 30 von dem Antriebskörper 16 umschlossen wird. Die Arretierausnehmungen 54 für die Verriegelungselemente 50 sind rund um die Innenfläche 56 verteilt. Die Verriegelungselemente 50 des Verriegelungsmechanismus 30 werden von den axialen Hebeln 38 in die Arretierausnehmungen 54 gedrückt. Bei diesem Ausführungsbeispiel sind die axialen Hebel 38 gegenüberliegend angeordnet. Die Spiralfeder 36 drückt gegen die radialen Hebel 40, wodurch die axialen Hebel 38 die Verriegelungselemente 50 zum Verriegeln betätigen.

In Fig. 3 ist der Auslösemechanismus 10 des Drehmomentwerkzeugs 12 entsprechend der Fig. 1, jedoch, anders als in den Figuren 1 und 2, in einem entriegelten Zustand dargestellt. Dabei ist das Drehmomentwerkzeug 12 in einem Ausschnitt als axialer Längsschnitt gezeigt. Das Drehmomentwerkzeug 12 umfasst den zylinderförmigen Grundkörper 14 mit dem gehäuseartigen Antriebskörper 16. In dem Bereich 18 des Antriebskörpers 16 ist der Antriebsschaft 20 fixiert. Der Antriebsschaft 20 ist fest mit dem Antriebskörper verbunden.

In dem Hohlraum 22 des Antriebskörpers 16 ist der Hubmagnet 24 angeordnet. Aus dem Hubmagneten 24 ragt der Bolzen 26 heraus. Der Bolzen 26 wirkt bei Betätigung des Hubmagneten 24 auf die Hebelanordnung 28 des Verriegelungsmechanismus 30, welcher zwischen dem Grundkörper 14 und dem Antriebskörper 16 vorgesehen ist.

Der Grundkörper 14 und der Antriebskörper 16 sind mit ihren Enden zusammengesteckt. Der Grundkörper 14 ist dabei drehbar in dem Antriebskörper 16 gelagert, sodass sich der Grundkörper 14 in dem entriegelten Zustand, wie hier dargestellt ist, um die gemeinsame Rotationsachse 32 frei laufen kann. Der Antriebskörper 16 überträgt dann kein Drehmoment auf den Grundkörper 14. Somit wird die Drehmomentsübertragung beim Auslösen des Drehmomentwerkzeugs 12 auf ein Werkstück unterbrochen.

Die Hebelanordnung 28 besteht, wie zuvor auch beschrieben, aus der Kniehebelanordnung 34, welche mit der Spiralfeder 36 vorgespannt ist. Die Spiralfeder 36 stützt sich dabei auf der Gelenkplattform 47 ab. Die Kniehebelanordnung 34 enthält die zwei axial angeordneten Hebel 38, welche über die zwei radial angeordneten Hebel 40 gelenkig miteinander verbunden sind. Die Hebelanordnung 28 selbst ist über die Gelenke 46 gelenkig mit der Gelenkplattform 47 des Grundkörpers verbunden.

Der Bolzen 26 des Hubmagneten 24 wirkt bei dessen Betätigung dabei auf die zentrale Gelenkverbindung 44. Jeweils an den Außenseiten 48 der axialen Hebel 38 befinden sich die Verriegelungselemente 50.

Die Spiralfeder 36 wirkt auf der gegenüberliegenden Seite 58 des Bolzens 26 auf das zentrale Gelenk 44 und spannt damit die Hebelanordnung 28 vor. Beim Entriegeln, wie es in dieser Fig. 3 dargestellt ist, wird der Hubmagnet 24 betätigt, welcher mit dem Bolzen 26 gegen die Federkraft der Spiralfeder 36 auf das zentrale Gelenk 44 wirkt. Dadurch wird die Kniehebelanordnung 34 betätigt, sodass die beiden axial verlaufenden Hebel 38 auf das zentrale Gelenk 44 schräg zulaufen. Dadurch wird jeweils ein Ausweichraum 59 für die Verriegelungselemente 50 geschaffen. Die Verriegelungselemente 50 bewegen sich in diesem Zustand aus der Arretieraufnahme 54 in diesen Ausweichraum 59. Hierdurch wird der Verriegelungsmechanismus 30 entriegelt und der Grundkörper 14 kann in dem Antriebskörper 16 frei laufen. Ein Drehmoment wird in diesem auslösenden Zustand nicht mehr übertragen. Die Verriegelungselemente 50 werden nämlich jetzt nicht mehr durch die Federkraft der Spiralfeder 36 von den axialen Hebeln 38 in die Arretierausnehmungen 54 gedrückt. Der Grundkörper 14 wird von dem Antriebskörper 16 entkoppelt.

In Fig. 4 wird ein Querschnitt des erfindungsgemäßen Auslösemechanismus 10 für ein Drehmomentwerkzeug 12 im entriegelten Zustand gemäß der Fig. 3 dargestellt. Soweit diese Fig. 4 den Fig. 1 bis 3 entspricht, werden auch hier die gleichen Bezugszeichen verwendet. In diesem dargestellten Ausschnitt ist der Grundkörper 14 im Bereich des Verriegelungsmechanismus 30 von dem Antriebskörper 16 umschlossen. Die Arretierausnehmungen 54 für die Verriegelungselemente 50 sind rund um die Innenfläche 56 verteilt. Die Verriegelungselemente 50 des Verriegelungsmechanismus 30 befinden sich in dem Ausweichraum 59. Der Grundkörper 14 ist für einen Freilauf in dem Antriebskörper 16 entriegelt.

Das Drehmomentwerkzeug 12 ist elektronisch ausgebildet und verfügt über eine geeignete Steuerelektronik mit Erfassungs- und Auswertemitteln. Ein Solldrehmoment wird in der Steuerelektronik gespeichert und mit dem jeweils anliegenden Drehmoment verglichen. Dazu wird das anliegende Drehmoment beispielsweise mit einem Dehnungsmessstreifen an einem Torsionsstab erfasst. Die Erfassungs- und Auswertemittel liefern dazu den anliegenden Drehmomentwert an die Steuerelektronik, welche als Signalgeber bei Erreichen des Solldrehmoments den Hubmagneten 24 zum Auslösen des Drehmomentwerkzeugs 12 ansteuert und betätigt.

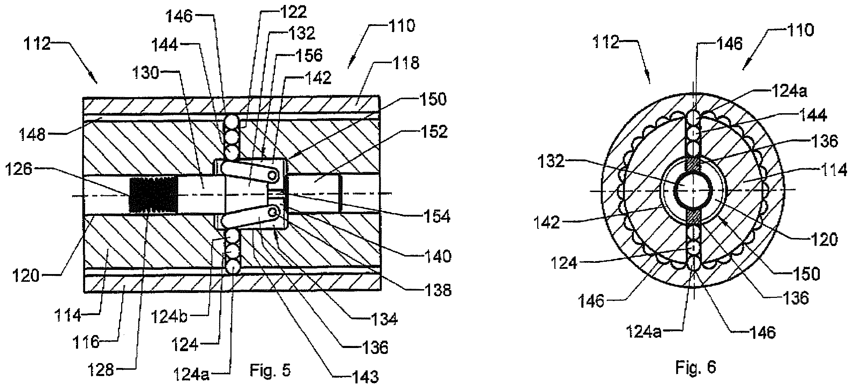

Die Fig. 5 zeigt ein weiteres Ausführungsbeispiel für einen Auslösemechanismus 110 eines Drehmomentwerkzeugs 112. Das Drehmomentwerkzeug 112 wird nur in einem schematischen Ausschnitt im Bereich des Auslösemechanismus 110 in einem verriegelten Zustand dargestellt. Hierbei handelt es sich um einen axialen Längsschnitt des Drehmomentwerkzeugs 112. Das Drehmomentwerkzeug 112 umfasst einen zylinderförmigen Grundkörper 114, welcher von einem entsprechenden Gehäuse 116 umgeben ist. Das Gehäuse 116 bildet dabei auch den Antriebskörper 118 zur Übertragung eines Drehmoments über den Grundkörper 114 auf ein Werkstück.

In dem Grundkörper 114 ist ein axialer Kanal 120 vorgesehen. Von dem axialen Kanal 120 gehen radiale Bohrungen 122 für Verriegelungselemente 124 ab. In dem axialen Kanal 120 befindet sich ein Anschlag 126, der eine Feder 128 von einer Seite abstützt. Auf der anderen Seite der Feder 128 befindet sich ein zylinderförmiger Stößel 130 mit einem kegelstumpfförmigen Ansatz 132. Durch die Federkraft der Feder 128 drückt der Stößel 130 gegen eine Hebelanordnung 134. Die Hebelanordnung 134 besteht aus zwei Hebeln 136, welche mit Gelenken 138 an einer Seite gelenkig an einer Gelenkplattform 140 vorgesehen sind. Die Hebelanordnung 134 befindet sich in einer Hebelkammer 142. Die Hebelkammer 142 wird im Bereich der Hebel 136 durch eine Aufweitung 143 des axialen Kanals 120 gebildet. Die Hebel 136 werden durch den kegelstumpfförmigen Ansatz 132 durch die Feder 128 zum Verriegeln in dieser Hebelkammer 142 auseinandergedrückt.

Die radialen Bohrungen 122 schließen an diese Hebelkammer 142 unmittelbar an. Die Hebel 136 können die radialen Bohrungen 122 wahlweise öffnen oder verschließen. Im verriegelten Zustand, wir hier in den Fig. 5 und 6 abgebildet ist, sind die Bohrungen 122 mit den Hebeln 136 verschlossen. Die Verriegelungselemente 124 werden radial nach außen gedrückt. Die Verriegelungselemente 124 sind als Kugeln 144 ausgebildet. Die jeweils radial äußersten Kugeln 124a werden in eine Arretieraufnahme 146 aufgenommen. Die Arretierausnehmungen 146 befinden sich auf der Innenfläche 148 des Gehäuses 116. Durch diese oben beschriebene Anordnung wird ein Verriegelungsmechanismus 150 gebildet.

Der Auslösemechanismus 110 umfasst ferner einen Hubmagneten 152 als elektrisch betriebenen Aktuator. Der Hubmagnet 152 befindet sich ebenfalls in dem axialen Kanal 120, auf der Seite, welche der Feder 128 gegenüberliegt. Zum Auslösen und Entriegeln des Verriegelungsmechanismus 150 schiebt der Hubmagnet 152 mit einem Bolzen 154 gegen den kegelstumpfförmigen Ansatz 132 des zylinderförmigen Stößels 130. Die Hebel 136 geben die radialen Bohrungen 122 frei und bilden mit der Hebelkammer 142 nun jeweils einen Ausweichraum 156, in welchen sich die innersten Kugeln 124b bewegen. Die äußersten Verriegelungselemente 124a bewegen sich entsprechend in die gleiche Richtung nach innen und geben die Verriegelung zwischen dem Grundkörper 114 und dem Gehäuse 116 frei, Die Verriegelungselemente 124a schieben sich dazu aus den Arretierausnehmungen 146 heraus. Der Grundkörper 114 kann nun in dem Gehäuse 116 frei rotieren. Ein Drehmoment wird nicht mehr übertragen, weil der Grundkörper 114 von dem Antriebskörper 118 entkoppelt ist.

Das Drehmomentwerkzeug 112 ist auch in diesem Ausführungsbeispiel elektronisch ausgebildet und verfügt über eine geeignete Steuerelektronik mit Erfassungs- und Auswertemitteln. Ein Solldrehmoment wird in der Steuerelektronik gespeichert und mit dem jeweils anliegenden Drehmoment verglichen. Dazu wird das anliegende Drehmoment beispielsweise mit einem Dehnungsmessstreifen an einem Torsionsstab erfasst. Die Erfassungs- und Auswertemittel liefern dazu den anliegenden Drehmomentwert an die Steuerelektronik, welche als Signalgeber bei Erreichen des Solldrehmoments den Hubmagneten 152 zum Auslösen des Drehmomentwerkzeugs 112 ansteuert und betätigt.

In Fig. 6 wird ein Querschnitt des erfindungsgemäßen Auslösemechanismus 110 für ein Drehmomentwerkzeug 112 im verriegelten Zustand gemäß der Fig. 5 dargestellt. Soweit diese Fig. 6 der Fig. 5 entspricht, werden auch die gleichen Bezugszeichen verwendet. In dieser Darstellung wird deutlich, wie der Grundkörper 114 im Bereich des Verriegelungsmechanismus 150 von dem Antriebskörper 118 umschlossen wird. Der Antriebskörper 118 bildet dabei das Gehäuse 116. Die Arretierausnehmungen 146 für die Verriegelungselemente 124 für die Verriegelung sind rund um die Innenfläche 148 des Gehäuses 116 verteilt. Die Verriegelungselemente 124 des Verriegelungsmechanismus 150 werden dazu von den Hebeln 136 in die Arretierausnehmungen 146 mit der Federkraft der Feder 128 gedrückt. Die Hebel 136 sind gegenüberliegend angeordnet. Der zylinderförmige Stößel 130 drückt die Verriegelungselemente 124 in die radialen Bohrungen 122, sodass die äußersten Verriegelungselemente 124a den Grundkörper 114 mit dem Antriebskörper 118 koppeln. Auf diese Weise wird von dem Antriebskörper 118 ein Drehmoment auf den Grundkörper 114 übertragen.

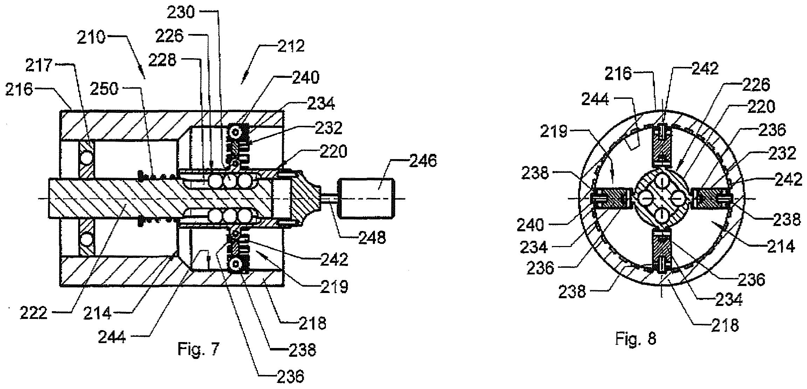

In Fig. 7 wird ein weiteres Ausführungsbeispiel für einen erfindungsgemäßen Auslösemechanismus 210 eines Drehmomentwerkzeugs 212 in einem verriegelten Zustand gezeigt. Das Drehmomentwerkzeug 212 wird nur in einem schematischen Ausschnitt im Bereich des Auslösemechanismus 210 dargestellt. Hierbei handelt es sich um einen axialen Längsschnitt des Drehmomentwerkzeugs 212. Das Drehmomentwerkzeug 212 umfasst einen zylinderförmigen Grundkörper 214, welcher von einem entsprechenden Gehäuse 216 umgeben ist. Das Gehäuse 216 bildet dabei auch den Antriebskörper 218 zur Übertragung eines Drehmoments über den Grundkörper 214 auf ein Werkstück. Der Antriebskörper 218 wird dazu über einen Verriegelungsmechanismus 219 mit dem Grundkörper 214 gekoppelt.

Der Grundkörper 214 enthält einen axialen Kanal 220. In dem axialen Kanal 220 befindet sich ein Kolben 222. Der Kolben 222 wird einerseits von dem Grundkörper 214 und andererseits von einer Anschlagsscheibe 217 gestützt, Der Kolben 222 ist mit einem Kugellager 226 axialbeweglich gelagert. Das Kugellager 226 wird von Ausnehmungen 228 in dem Kolben 222 und Kugeln 230 gebildet.

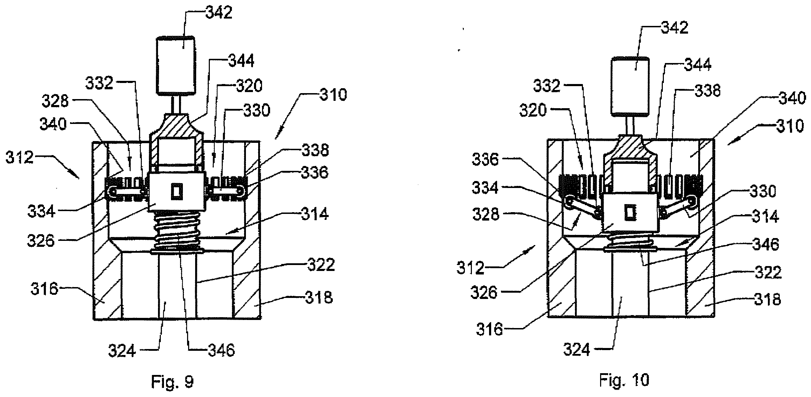

Es ist ferner eine Hebelanordnung 232 vorgesehen, welche von vier rechtwinkelig angeordneten Hebeln 234 (siehe auch Fig. 10) gebildet wird. Die Hebel 234 sind gelenkig mit Gelenken 236 an dem Kolben 222 befestigt. An den Enden der Hebel 234 sind Verriegelungselemente 238 vorgesehen. Die Verriegelungselemente 238 bestehen aus kleinen Verriegelungsrädchen 240, welche sich im verriegelten Zustand, wie abgebildet in Arretierausnehmungen 242 befinden. Die Arretierausnehmungen 242 sind in der Innenfläche 244 des Gehäuses 216 vorgesehen.

Ein Hubmagnet 246 schiebt als elektrisch betriebener Aktuator mit einem Bolzen 248 den Kolben 222 zum Entriegeln in eine axiale Richtung. Dabei werden die Verriegelungselemente 238 mithilfe der Hebelanordnung 232 aus den Arretierausnehmungen 242 bewegt. Der Grundkörper 214 ist nun frei beweglich in dem Gehäuse 216. Der Antriebskörper 218 ist von dem Grundkörper 214 entkoppelt, sodass kein Drehmoment vom Antriebskörper 218 auf den Grundkörper 214 mehr übertragen werden kann. Eine Kolbenfeder 250 schiebt zum Verriegeln den Kolben 222 wieder in seine verriegelnde Stellung, wie abgebildet, zurück.

Das Drehmomentwerkzeug 212 ist auch in dieser Variante elektronisch ausgebildet und verfügt über eine geeignete Steuerelektronik mit Erfassungs- und Auswertemitteln. Ein Solldrehrnoment wird in der Steuerelektronik gespeichert und mit dem Jeweils anliegenden Drehmoment verglichen. Dazu wird das anliegende Drehmoment beispielsweise mit einem Dehnungsmessstreifen an einem Torsionsstab erfasst. Die Erfassungs- und Auswertemittel liefern dazu den anliegenden Drehmomentwert an die Steuerelektronik, welche als Signalgeber bei Erreichen des Solldrehmoments den Hubmagneten 246 zum Auslösen des Drehmomentwerkzeugs 212 ansteuert und betätigt.

In Fig. 8 wird ein Querschnitt des erfindungsgemäßen Auslösemechanismus 210 für ein Drehmomentwerkzeug 212 im verriegelten Zustand gemäß der Fig. 7 dargestellt. Soweit diese Fig. 8 der Fig. 7 entspricht, werden auch die gleichen Bezugszeichen verwendet. In dieser Darstellung wird deutlich, wie der Grundkörper 214 im Bereich des Verriegelungsmechanismus 219 von dem Antriebskörper 218 umschlossen wird. Der Antriebskörper 218 bildet dabei das Gehäuse 216. Die Arretierausnehmungen 242 für die Verriegelungselemente 238 für die Verriegelung sind rund um die Innenfläche 244 des Gehäuses 216 verteilt. Die Verriegelungselemente 238 des Verriegelungsmechanismus 219 werden dazu von den Hebeln 234, welche die Hebelanordnung 232 bilden, in die Arretierausnehmungen 242 mit der Federkraft der Kolbenfeder 250 gedrückt. Die Hebel 234 sind in 90°-Winkeln radial zueinander angeordnet. Solange der Grundkörper über die Hebelanordnung 232 mit dem Antriebskörper 218 gekoppelt ist, lassen sich Drehmomente übertragen. Durch Entkopplung beim Auslösen ist der Grundkörper frei drehbar im Antriebsköper 218.

In Fig. 9 wird ein weiteres Ausführungsbeispiel für einen erfindungsgemäßen Auslösemechanismus 310 eines Drehmomentwerkzeugs 312 in einem verriegelten Zustand gezeigt. Das Drehmomentwerkzeug 312 wird nur in einem schematischen Ausschnitt im Bereich des Auslösemechanismus 310 dargestellt. Hierbei handelt es sich um einen axialen Längsschnitt des Drehmomentwerkzeugs 312. Das Drehmomentwerkzeug 312 umfasst einen zylinderförmigen Grundkörper 314 welcher von einem entsprechenden Gehäuse 316 umgeben ist. Das Gehäuse 316 bildet dabei auch den Antriebskörper 318 zur Übertragung eines Drehmoments über den Grundkörper 314 auf ein Werkstück. Der Antriebskörper 318 wird dazu über einen Verriegelungsmechanismus 320 mit dem Grundkörper 314 gekoppelt.

Der Grundkörper 314 enthält einen axialen Kanal 322. In dem axialen Kanal 322 befindet sich eine Welle 324. Die Welle 324 ist in dem Grundkörper 314 fest verankert.

Auf der Welle 324 befindet sich ein Ringkörper 326. Der Ringkörper 326 ist auf der Welle 324 verschiebbar vorgesehen. An dem Ringkörper 326 ist eine Hebelanordnung 328 vorgesehen. Die Hebelanordnung 328 enthält Hebel 330, welche an dem Ringkörper 326 mit Gelenken 332 in axialer Richtung schwenkbar vorgesehen sind.

An den Enden der Hebel 330 sind Verriegelungselemente 334 vorgesehen. Die Verriegelungselemente 334 bestehen aus kleinen Verriegelungsrädchen 336, welche sich im verriegelten Zustand, wie abgebildet, in Arretierausnehmungen 338 befinden. Die Arretierausnehmungen 338 sind in der Innenfläche 340 des Gehäuses 316 vorgesehen. An einem Hubmagneten 342, welcher als elektrisch betriebener Aktuator eingesetzt wird, ist ein topfartiger Zylinder 344 vorgesehen. Der topfartige Zylinder 344 hat einen Durchmesser, der der Welle 324 in etwa entspricht. Zwischen dem Grundkörper 314 und dem Ringkörper 326 befindet sich eine Feder 346. Der Ringkörper 326 ist zwischen dem topfartigen Zylinder 344 und der Feder 346 federbelastet vorgespannt.

Im verriegelten Zustand, wie er in Fig. 9 abgebildet ist, treibt der Antriebskörper 318 die Welle 324 und damit den Grundkörper 314 an. Die Hebelanordnung 328 koppelt dabei den Antriebskörper 318 mit der im Grundkörper 314 verankerten Welle 324.

Die Fig. 10 zeigt den Auslösemechanismus 310 gemäß der Fig. 9, jedoch diesmal in einem entriegelten Zustand. Soweit sich die beiden Figuren entsprechen werden auch die gleichen Bezugszeichen verwendet. Sobald das Drehmomentwerkzeug bei einem erreichten Solldrehmoment auslösen soll, schiebt der Hubmagnet 342 mit dem topfartigen Zylinder 344 den Ringkörper zum Entriegeln in eine axiale Richtung, Dabei werden die Verriegelungselemente 334 mithilfe der Hebelanordnung 328 aus den Arretierausnehmungen 338 bewegt. Der Grundkörper 314 ist nun frei beweglich in dem Gehäuse 316. Der Antriebskörper 318 ist von dem Grundkörper 314 entkoppelt, sodass kein Drehmoment vom Antriebskörper 318 auf den Grundkörper 314 mehr übertragen werden kann.

Das Drehmomentwerkzeug 312 ist auch in dieser Variante elektronisch ausgebildet und verfügt, auch wie die zuvor beschriebenen Ausführungsbeispiele, über eine geeignete Steuerelektronik mit Erfassungs- und Auswertemitteln. Ein Solldrehmoment wird in der Steuerelektronik gespeichert und mit dem jeweils anliegenden Drehmoment verglichen. Dazu wird das anliegende Drehmoment beispielsweise mit einem Dehnungsmessstreifen an einem Torsionsstab erfasst. Die Erfassungs- und Auswertemittel liefern dazu den anliegenden Drehmomentwert an die Steuerelektronik, welche als Signalgeber bei Erreichen des Solldrehmoments den Hubmagneten 342 zum Auslösen des Drehmomentwerkzeugs 312 ansteuert und betätigt.

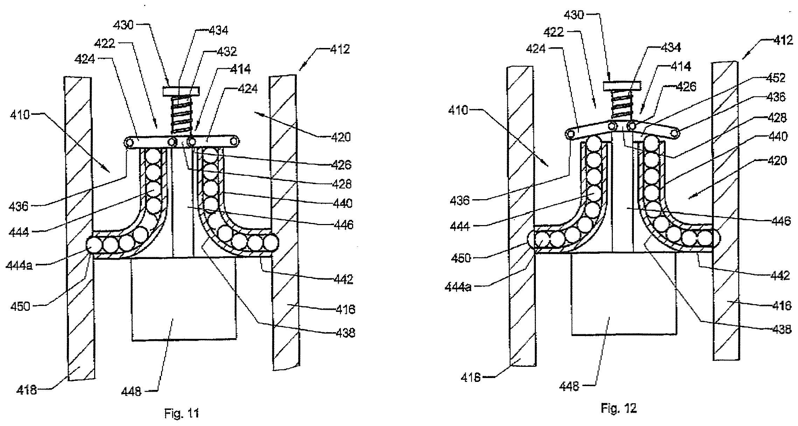

Die Fig. 11 zeigt ein weiteres Ausführungsbeispiel eines erfindungsgemäßen Auslösemechanismus 410 eines Drehmomentwerkzeugs 412 in einer Prinzipskizze, Das Drehmomentwerkzeug 412 wird nur als ein schematischer Ausschnitt im Bereich des Auslösemechanismus 410 dargestellt. Dabei ist der Auslösemechanismus 410 mit einem Verriegelungsmechanismus 414 im verriegelten Zustand dargestellt. Mit 416 wird ein Gehäuse des Drehmomentwerkzeugs 412 bezeichnet. Das Gehäuse 416 bildet auch in diesem Ausführungsbeispiel einen Antriebskörper 418 zur Übertragung eines Drehmoments auf einen Grundkörper 420. Der Grundkörper 420 enthält den Verriegelungsmechanismus 414. Dieser Verriegelungsmechanismus 414 umfasst eine Hebelanordnung 422. Die Hebelanordnung 422 besteht aus zwei in etwa radialen Hebeln 424, welche um Gelenke 426 schwenkbar angeordnet sind. Die Gelenke 426 befinden sich an den äußeren Enden eines zentralen und beweglichen Stegs 428. An dem Steg 428 ist ein stempelartiger Körper 430 vorgesehen, an dessen Schaft 432 eine Feder 434 den Steg 428 vorgespannt.

Jeweils an dem anderen Ende der Hebel 424 befindet sich ebenfalls ein Gelenk 436. In der Zeichnung unterhalb der Hebel 424 schließt sich jeweils ein gekrümmtes Umlenkrohr 438 an. Dieses gekrümmte Umlenkrohr hat eine 90°-Krümmung, welche von einer axialen Richtung 440 in eine radiale Richtung 442 übergeht. In dem gekrümmten Umlenkrohr 438 befinden sich Verriegelungselemente 444. Bei den Verriegelungselementen 444 handelt es sich um Kugeln.

Ein Stößel 446 eines Hubmagneten 448 als elektrisch betriebener Aktuator stößt gegen den Steg 428. In dem verriegelten Zustand des Auslösemechanismus 410 werden die Verriegelungselemente 444 von den Hebeln 424 in die Umlenkrohre 438 gedrückt. Das äußerste Verriegelungselement 444a wird dabei jeweils in eine Arretierausnehmung 450 zum Verriegeln, wie es in Fig. 11 dargestellt wird, bewegt. In dem verriegelten Zustand rotieren der Antriebskörper 418 und der Grundkörper 420 zum Übertragen eines Drehmoments immer um die gleiche Rotationsachse.

Das Drehmomentwerkzeug 412 ist auch in dieser Variante elektronisch ausgebildet und verfügt, auch wie die zuvor beschriebenen Ausführungsbeispiele, über eine geeignete Steuerelektronik mit Erfassungs- und Auswertemitteln. Ein Solldrehmoment wird in der Steuerelektronik gespeichert und mit dem jeweils anliegenden Drehmoment verglichen. Dazu wird das anliegende Drehmoment beispielsweise mit einem Dehnungsmessstreifen an einem Torsionsstab erfasst. Die Erfassungs- und Auswertemittel liefern dazu den anliegenden Drehmomentwert an die Steuerelektronik, welche als Signalgeber bei Erreichen des Solldrehmoments den Hubmagneten 448 zum Auslösen des Drehmomentwerkzeugs 412 ansteuert und betätigt.

Die Fig. 12 zeigt das Ausführungsbeispiel gemäß Fig. 11 eines erfindungsgemäßen Auslösemechanismus 410 eines Drehmomentwerkzeugs 412 in einer Prinzipskizze. Dabei ist der Auslösemechanismus 410 mit dem Verriegelungsmechanismus 414 im entriegelten Zustand dargestellt. Soweit diese Fig. 12 der Fig. 11 entspricht, werden auch die gleichen Bezugszeichen verwendet.

Das Gehäuse 416 bildet den Antriebskörper 418 zur Übertragung eines Drehmoments auf den Grundkörper 420. Der Grundkörper 420 enthält den Verriegelungsmechanismus 414. Dieser Verriegelungsmechanismus 414 enthält Hebelanordnung 422. Die Hebelanordnung 422 besteht aus den zwei in etwa radialen Hebeln 424, welche um die Gelenke 426 schwenkbar angeordnet sind. Die Gelenke 426 befinden sich an dem zentralen und beweglichen Steg 428 mit dem stempelartiger Körper 430. Durch die Feder 434 ist der Steg 428 federbelastet vorgespannt.

Das Stößel 446 des Hubmagneten 448 drückt beim Auslösen des Drehmomentwerkzeugs 412 gegen den Steg 428. In dem dargestellten entriegelten Zustand des Auslösemechanismus 410 werden dabei die Hebel 424 von den Enden der gekrümmten Umlenkrohre 438 bewegt. Hierdurch entsteht ein Ausweichraum 452, in welchen Verriegelungselemente 444 ausweichen können. Die Arretierausnehmung 450 wird hingegen freigegeben. Dadurch sind der Grundkörper 420 und der Antriebskörper 418 nicht mehr miteinander gekoppelt. Der Antriebskörper 418 kann in diesem ausgelösten und entriegelten Zustand somit kein Drehmoment auf den Grundkörper 420 übertragen. Der Grundkörper 420 kann in dem Gehäuse 416 frei rotieren.

**Bezugszeichenliste**

| | | | |
|---|---|---|---|
| | | 59 | Ausweichraum |
| | | | |
| | | 110 | Auslösemechanismus |
| 10 | Auslösemechanismus | 112 | Drehmomentwerkzeug |
| 12 | Drehmomentwerkzeug | 114 | Grundkörper |
| 14 | Grundkörper | 116 | Gehäuse |
| 16 | Antriebskörper | 118 | Antriebskörper |
| 18 | Bereich des Antriebskörpers | 120 | Axialer Kanal |
| 20 | Antriebsschaft | 122 | Radiale Bohrung |
| 22 | Hohlraum des Antriebskörpers | 124 | Verriegelungselemente |
| | | 124a | Äußerste Kugeln |
| 24 | Hubmagnet | 124b | Innerste Kugeln |
| 26 | Bolzen des Hubmagneten | 126 | Anschlag |
| 28 | Hebelanordnung | 128 | Feder |
| 30 | Verriegelungsmechanismus | 130 | Zylinderförmiger Stößel |
| 32 | Rotationsachse | 132 | Kegelstumpfförmiger Ansatz |
| 34 | Kniehebelanordnung | 134 | Hebelanordnung |
| 36 | Spiralfeder | 136 | Hebel |
| 38 | Axiale Hebel | 138 | Gelenke |
| 40 | Radiale Hebel | 140 | Gelenkplattform |
| 42 | Gelenkverbindung | 142 | Hebelkammer |
| 44 | Zentrale Gelenkverbindung | 143 | Aufweitung |
| 46 | Gelenke | 144 | Kugeln |
| 47 | Gelenkplattform | 146 | Arretierausnehmungen |
| 48 | Außenseite der axialen Hebel | 148 | Innenfläche des Gehäuses |
| | | 150 | Verriegelungsmechanismus |
| 50 | Verriegelungselemente | 152 | Hubmagnet |
| 52 | Kugeln | 154 | Bolzen des Hubmagneten |
| 54 | Arretierausnehmungen | 156 | Ausweichraum |
| 56 | Innenfläche | | |
| 58 | Gegenüberliegende Seite | 210 | Auslösemechanismus |
| 212 | Drehmomentwerkzeug | 328 | Hebelanordnung |
| 214 | Grundkörper | 330 | Hebel |
| 216 | Gehäuse | 332 | Gelenke |
| 217 | Anschlagsscheibe | 334 | Verriegelungselemente |
| 218 | Antriebskörper | 336 | Verriegelungsrädchen |
| 219 | Verriegelungsmechanismus | 338 | Arretierausnehmungen |
| 220 | Axialer Kanal | 340 | Innenfläche des Gehäuses |
| 222 | Kolben | 342 | Hubmagnet |
| 226 | Kugellager | 344 | Topfartiger Zylinder |
| 228 | Ausnehmungen | 346 | Feder |
| 230 | Kugeln des Kugellagers | | |
| 232 | Hebelanordnung | 410 | Auslösemechanismus |
| 234 | Hebel | 412 | Drehmomentwerkzeug |
| 236 | Gelenke | 414 | Verriegelungsmechanismus |
| 238 | Verriegelungselemente | 416 | Gehäuse |
| 240 | Verriegelungsrädchen | 418 | Antriebskörper |
| 242 | Arretierausnehmungen | 420 | Grundkörper |
| 244 | Innenfläche des Gehäuses | 422 | Hebelanordnung |
| 246 | Hubmagnet | 424 | Hebel |
| 248 | Bolzen | 426 | Gelenke |
| 250 | Kolbenfeder | 428 | Steg |
| | | 430 | Stempelartiger Körper |
| 310 | Auslösemechanismus | 432 | Schaft |
| 312 | Drehmomentwerkzeug | 434 | Feder |
| 314 | Grundkörper | 436 | Gelenk |
| 316 | Gehäuse | 438 | Gekrümmtes Umlenkrohr |
| 318 | Antriebskörper | 440 | Axialer Richtung |
| 320 | Verriegelungsmechanismus | 442 | Radiale Richtung |
| 322 | Axialer Kanal | 444,444a | Verriegelungselement |
| 324 | Welle | 446 | Stößel |
| 326 | Ringkörper | 448 | Hubmagnet |
| 450 | Arretierausnehmung | | |
| 452 | Ausweichraum | | |

## Patentansprüche

1. Auslösemechanismus (10, 110, 210, 310, 410) für ein elektronisch auslösendes Drehmomentwerkzeug (12, 112, 212, 312, 412) zum Anziehen einer Schraube oder dgl., welches bei einem Solldrehmoment auslöst, enthaltend
a) einen Antriebskörper (16, 118, 218, 318,418) und einen Grundkörper (14, 114, 214, 314, 420), welche zum Übertragen eines Drehmoments um eine gemeinsame Achse rotieren,
b) einen Verriegelungsmechanismus (30, 150, 219, 320, 414), welcher den Antriebskörper (16, 118, 218, 318, 418) und den Grundkörper (14, 114, 214, 314,420) zur Übertragung eines Drehmoments miteinander koppelt,
c) Erfassungs- und Auswertemittel zum Erfassen und Auswerten des übertragenen Drehmoments,
d) einen Signalgeber, welcher den Verriegelungsmechanismus (30, 150, 219, 320, 414) zum Entkoppeln des Antriebskörpers (16, 118, 218, 318, 418) von dem Grundkörper (14, 114, 214, 314, 420) bei Erreichen eines Solldrehmoments betätigt,
e) der Verriegelungsmechanismus (30, 150, 219, 320, 414) eine federbelastete Hebelanordnung (28, 134, 232, 328, 422) aufweist, wobei die Hebelanordnung (28, 134, 232, 328, 422) den Antriebskörper (16, 118, 218, 318, 418) mit dem Grundkörper (14, 114, 214, 314, 420) zur Übertragung eines Drehmoment koppelt und beim Auslösen den Grundkörper (14, 114, 214, 314, 420) zum Freilauf entriegelt,
**dadurch gekennzeichnet, dass**
f) die Hebelanordnung (28, 134, 232, 328, 422) des Verriegelungsmechanismus (30, 150, 219, 320, 414) auf ein Verriegelungselement (50, 124, 238, 334, 444) wirkt, welches zum Verriegeln in eine Ausnehmung (54, 146, 242, 338, 450) des Antriebskörpers (16, 118, 218, 318, 418) greift und zum Entriegeln aus der Ausnehmung (54, 146, 242, 338, 450) mittels der Hebelanordnung (28, 134, 232, 328, 422) entfernt wird.

2. Auslösemechanismus (10, 110, 210, 310, 410) für ein elektronisch auslösendes Drehmomentwerkzeug (12, 112, 212, 312, 412) zum Anziehen einer Schraube oder dgl., welches bei einem Solldrehmoment auslöst, nach Anspruch 1, **dadurch gekennzeichnet, dass** ein elektrisch betriebener Aktuator (24, 152, 246, 342, 448) vorgesehen ist, welcher den Verriegelungsmechanismus (30, 150, 219, 320, 414) bei Erreichen des Solldrehmoments entriegelt.

3. Auslösemechanismus (10, 110, 210, 310, 410) für ein elektronisch auslösendes Drehmomentwerkzeug (12, 112, 212, 312, 412) zum Anziehen einer Schraube oder dgl., welches bei einem Solldrehmoment auslöst, nach einem der Ansprüche 1 bis 2, **dadurch gekennzeichnet, dass** die Hebelanordnung (28) als federbelastete Kniehebelanordnung (34) ausgebildet ist.

4. Auslösemechanismus (10, 110, 210, 310, 410) für ein elektronisch auslösendes Drehmomentwerkzeug (12, 112, 212, 312, 412) zum Anziehen einer Schraube oder dgl., welches bei einem Solldrehmoment auslöst, nach Anspruch 4, **dadurch gekennzeichnet, dass** das Verriegelungselement (50, 124, 238, 334, 444) in einem Umlenkrohr (438) in dem Grundkörper (14, 114, 214, 314, 420) vorgesehen ist.

5. Auslösemechanismus (10, 110, 210, 310, 410) für ein elektronisch auslösendes Drehmomentwerkzeug (12, 112, 212, 312, 412) zum Anziehen einer Schraube oder dgl., welches bei einem Solldrehmoment auslöst, nach einem der Ansprüche 1 und 4, **dadurch gekennzeichnet, dass** das Verriegelungselement (50, 124, 238, 334, 444) in einem um 90° gekrümmten Umlenkrohr (438) in dem Grundkörper (14, 114, 214, 314, 420) vorgesehen ist, welches von einer axialen Richtung (440) in eine radiale Richtung (442) übergeht.

6. Auslösemechanismus (10, 110, 210, 310, 410) für ein elektronisch auslösendes Drehmomentwerkzeug (12, 112, 212, 312, 412) zum Anziehen einer Schraube oder dgl., welches bei einem Solldrehmoment auslöst, nach Anspruch 1, **gekennzeichnet durch** einen axialen Kanal (120) in dem Grundkörper (114), in welchem ein federbelastetes und bewegliches Stößel (130) vorgesehen ist, welches auf eine Hebelanordnung (134) zur Verriegelung wirkt und beim Auslösen zum Entriegeln in dem Kanal (120) zur Erzeugung eines Ausweichraums (156) für ein Verriegelungselement (124) mithilfe des elektrisch betriebenen Aktuators (152) bewegt wird.

7. Auslösemechanismus (10, 110, 210, 310, 410) für ein elektronisch auslösendes Drehmomentwerkzeug (12, 112, 212, 312, 412) zum Anziehen einer Schraube oder dgl., welches bei einem Solldrehmoment auslöst, nach einem der Ansprüche 1 bis 2 **dadurch gekennzeichnet, dass** ein federbelasteter Kolben (222) in einem Kanal (220) des Grundkörpers (214) vorgesehen ist, an dem die Hebelanordnung (232) mit einem Gelenk (236) zum Verriegeln oder zum Entriegeln des Verriegelungsmechanismus (219) vorgesehen ist.

8. Auslösemechanismus (10, 110, 210, 310, 410) für ein elektronisch auslösendes Drehmomentwerkzeug (12, 112, 212, 312, 412) zum Anziehen einer Schraube oder dgl., welches bei einem Solldrehmoment auslöst, nach Anspruch 1, **dadurch gekennzeichnet, dass** der Grundkörper (314) eine axiale Welle (324) umfasst, auf der ein federbelasteter Ringkörper (326) vorgesehen ist, wobei die Hebelanordnung (328) zur Betätigung des Verriegelungselements (334) an dem Ringkörper (326) angeordnet ist.

## Claims

1. A trigger mechanism (10, 110, 210, 310,410) for a electronically triggered torque tool (12, 112, 212, 312, 412) to tighten a screw or a similar fastener, which triggers at a target torque, comprising
a) a drive body (16, 118, 218, 318, 418) and a main body (14, 114, 214, 314, 420), which rotate around a common axis to transfer a torque,
b) a locking mechanism (30, 150, 219, 320, 414), which couples the drive body (16, 118, 218, 318, 418) and the main body (14, 114, 214, 314, 420) to transfer a torque,
c) measuring and evaluating means to measure and evaluate the torque transferred,
d) a signaling device, which activates the locking mechanism (30, 150, 219, 320,414) to decouple the drive body (16, 118, 218, 318, 418) from the main body (14, 114, 214, 314, 420) upon reaching a target torque, and
e) the locking mechanism (30, 150, 219, 320, 414) having a spring-loaded fever arrangement (28, 134, 232, 328, 422), whereby the lever arrangement (28, 134, 232, 328, 422) couples the drive body (16, 118, 218, 318, 418) to the main body (14, 114, 214, 314, 420) to transfer a torque and which when released unlocks the main body (14, 114, 214, 314, 420) so it can move freely,
**characterized in that**
f) the lever arrangement (28, 134, 232, 328, 422) of the locking mechanism (30, 150, 219, 320, 414) acts on a locking element (50, 124, 238, 334, 444), which engages a recess (54, 146, 242, 338,450) in the drive body (16, 118, 218, 318, 418) to lock, and which is withdrawn from the recess (54, 146, 242, 338, 450) by means of the lever arrangement (28, 134, 232, 328,422) to unlock.

2. A trigger mechanism (10, 110, 210, 310, 410) for an electronically triggered torque tool (12, 112, 212, 312, 412) to tighten a screw or a similar fastener, which triggers at a target torque, according to Claim 1, **characterized in that** an electrically operated actuator (24, 152, 246, 342, 448) is provided, which unlocks the locking mechanism (30, 150, 219, 320,414) upon reaching the target torque.

3. A trigger mechanism (10, 110, 210, 310, 410) for an electronically triggered torque tool (12, 112, 212, 312, 412) to tighten a screw or a similar fastener, which triggers at a target torque, according to one of Claims 1 to 2, **characterized in that** the lever arrangement (28) is formed as a spring-loaded toggle lever arrangement (34).

4. A trigger mechanism (10, 110, 210, 310, 410) for an electronically triggered torque tool (12, 112, 212, 312, 412) to tighten a screw or a similar fastener, which triggers at a target torque, according to Claim 4, **characterized in that** the locking element (50, 124, 238, 334, 444) is provided in a deflection tube (438) in the main body (14, 114, 214, 314, 420).

5. A trigger mechanism (10, 110, 210, 310, 410) for an electronically triggered torque tool (12, 112, 212, 312, 412) to tighten a screw or a similar fastener, which triggers at a target torque, according to one of Claims 1 and 4, **characterized in that** the locking element (50, 124, 238, 334, 444) is provided in a deflection tube (438), which is curved at an angle of 90° in the main body (14, 114, 214, 314,420) and which transitions from an axial direction (440) to a radial direction (442).

6. A trigger mechanism (10, 110, 210, 310,410) for an electronically triggered torque tool (12, 112, 212, 312, 412) to tighten a screw or a similar fastener, which triggers at a target torque, according to Claim 1, **characterized by** an axial channel (120) in the main body (114), in which a spring-loaded and movable plunger (130) Is provided, which acts on a lever arrangement (134) to lock and which is moved in the channel (120) with the aid of the electrically operated actuator (152) upon release when unlocking to create a free space (156) for a locking element (124).

7. A trigger mechanism (10, 110, 220, 310, 410) for an electronically triggered torque tool (12, 112, 212, 312, 412) to tighten a screw or a similar fastener, which triggers at a target torque, according to one of Claims 1 to 2, **characterized in that** a spring-loaded piston (222) in a channel (220) of the main body (214) is provided, on which the lever arrangement (232) is provided with a hinge joint (236) to lock or unlock the locking mechanism (219).

8. A trigger mechanism (10, 110, 210, 310, 410) for an electronically triggered torque tool (12, 112, 212, 312, 412) to tighten a screw or a similar fastener, which triggers at a target torque, according to Claim 1, **characterized in that** the main body (314) comprises an axial shaft (324), on which a spring-loaded ring body (326) is provided, whereby the lever arrangement (328) is arranged on the ring body (326) to activate the locking element (334).

## Revendications

1. Mécanisme de déclenchement (10, 110, 210, 310, 410) pour un outil de couple à déclenchement électronique (12, 112, 212, 312, 412) destiné à serrer une vis ou pièce similaire qui se déclenche une fois un couple de consigne atteint, comprenant :
(a) un corps d'entraînement (16, 118, 218, 318, 418) et un corps de base (14, 114, 214, 314, 420) qui tournent autour d'un axe commun afin de transmettre un couple,
(b) un mécanisme de verrouillage (30, 150, 219, 320, 414) qui rattache le corps d'entraînement (16, 118, 218, 318, 418) et le corps de base (14, 114, 214, 314, 420) l'un à l'autre afin de transmettre un couple,
(c) des moyens de saisie et d'évaluation destinés à saisir et à évaluer le couple transmis,
(d) un transmetteur de signaux qui actionne le mécanisme de verrouillage (30, 150, 219, 320, 414) afin de détacher le corps d'entraînement (16, 118, 218, 318, 418) du corps de base (14, 114, 214, 314, 420) une fois un couple de consigne atteint,
(e) le mécanisme de verrouillage (30, 150, 219, 320, 414) présente une disposition de levier à ressort (28, 134, 232, 328, 422), la disposition de levier à ressort (28, 134, 232, 328, 422) rattachant le corps d'entraînement (16, 118, 218, 318, 418) au corps de base (14, 114, 214, 314, 420) afin de transmettre un couple et déverrouille, lors du déclenchement, le corps de base (14, 114, 214, 314, 420) en vue de sa course libre,
**caractérisé en ce que**
(f) la disposition de levier (28, 134, 232, 328, 422) du mécanisme de verrouillage (30, 150, 219, 320, 414) agit sur un élément de verrouillage (50, 124, 238, 334, 444) qui mord pour le verrouillage dans un creux (54, 146, 242, 338, 450) du corps d'entraînement (16, 118, 218, 318, 418) et qui est enlevé du creux (54, 146, 242, 338, 450), pour le déverrouillage, au moyen de la disposition de levier (28, 134, 232, 328, 422).

2. Mécanisme de déclenchement (10, 110, 310, 410) pour un outil de couple à déclenchement électronique (12, 112, 212, 312, 412) destiné à serrer une vis ou pièce similaire qui se déclenche une fois un couple de consigne atteint, selon la revendication 1, **caractérisé en ce qu'**il est prévu un actionneur à actionnement électrique (24, 152, 246, 342, 448) qui déverrouille le mécanisme de verrouillage (30, 150, 219, 320, 414) une fois le couple de consigne atteint.

3. Mécanisme de déclenchement (10, 110, 310, 410) pour un outil de couple à déclenchement électronique (12, 112, 212, 312, 412) destiné à serrer une vis ou pièce similaire qui se déclenche une fois un couple de consigne atteint, selon l'une quelconque des revendications 1 à 2, **caractérisé en ce que** la disposition de levier (28) est configurée sous forme de disposition de levier à genouillère à ressort (34).

4. Mécanisme de déclenchement (10, 110, 310, 410) pour un outil de couple à déclenchement électronique (12, 112, 212, 312, 412) destiné à serrer une vis ou pièce similaire qui se déclenche une fois un couple de consigne atteint, selon la revendication 4, **caractérisé en ce que** l'élément de verrouillage (50, 124, 238, 334, 444) est prévu dans un tube de déviation (438) situé dans le corps de base (14, 114, 214, 314, 420).

5. Mécanisme de déclenchement (10, 110, 310, 410) pour un outil de couple à déclenchement électronique (12, 112, 212, 312, 412) destiné à serrer une vis ou pièce similaire qui se déclenche une fois un couple de consigne atteint, selon l'une quelconque des revendications 1 et 4, **caractérisé en ce que** l'élément de verrouillage (50, 124, 238, 334, 444) est prévu dans un tube de déviation (438) cintré de 90° et situé dans le corps de base (14, 114, 214, 314, 420) qui passe d'un sens axial (440) à un sens radial (442).

6. Mécanisme de déclenchement (10, 110, 310, 410) pour un outil de couple à déclenchement électronique (12, 112, 212, 312, 412) destiné à serrer une vis ou pièce similaire qui se déclenche une fois un couple de consigne atteint, selon la revendication 1, **caractérisé par** un canal axial (120) situé dans le corps de base (114) dans lequel il est prévu un poussoir (130) à ressort susceptible de se déplacer qui agit sur une disposition de levier (134) en vue du verrouillage et est déplacé, lors du déclenchement en vue du déverrouillage, dans le canal (120) afin de créer un espace de dégagement (156) pour un élément de verrouillage (124) à l'aide de l'actionneur à actionnement électrique (152).

7. Mécanisme de déclenchement (10, 110, 310, 410) pour un outil de couple à déclenchement électronique (12, 112, 212, 312, 412) destiné à serrer une vis ou pièce similaire qui se déclenche une fois un couple de consigne atteint, selon l'une quelconque des revendications 1 à 2, **caractérisé en ce qu'**il est prévu un piston (222) à ressort dans un canal (220) du corps de base (214) sur lequel est prévue la disposition de levier (232) avec une articulation (236) afin de verrouiller ou déverrouiller le mécanisme de verrouillage (219).

8. Mécanisme de déclenchement (10, 110, 310, 410) pour un outil de couple à déclenchement électronique (12, 112, 212, 312, 412) destiné à serrer une vis ou pièce similaire qui se déclenche une fois un couple de consigne atteint, selon la revendication 1, **caractérisé en ce que** le corps de base (314) comprend un arbre axial (324) sur lequel il est prévu un corps annulaire (326) à ressort, la disposition de levier (328) étant disposée sur le corps annulaire (326) afin d'actionner l'élément de verrouillage (334).
